# EUROPÄISCHE PATENTSCHRIFT

(11) **EP 3 850 705 B1**
(45) Veröffentlichungstag und Bekanntmachung des Hinweises auf die Patenterteilung: **07.10.2026**
(21) Anmeldenummer: 19759289.2
(22) Anmeldetag: 15.08.2019
(51) Int. Cl.: H01Q 1/32, H01Q 1/52, H01Q 21/06, G01S 7/03, G01S 13/44, G01S 13/931, H01Q 1/38, H01Q 1/42

(54) **RADARSYSTEM MIT EINER KUNSTSTOFFANTENNE MIT REDUZIERTER EMPFINDLICHKEIT AUF STÖRWELLEN AUF DER ANTENNE SOWIE AUF REFLEKTIONEN VON EINER SENSORABDECKUNG**
RADAR SYSTEM HAVING A PLASTICS ANTENNA WITH REDUCED SENSITIVITY TO INTERFERENCE WAVES ON THE ANTENNA AND TO REFLECTIONS FROM A SENSOR COVER
SYSTÈME RADAR POURVU D'UNE ANTENNE EN PLASTIQUE À SENSIBILITÉ RÉDUITE AUX ONDES PERTURBATRICES SUR L'ANTENNE AINSI QU'AUX RÉFLEXIONS D'UN COUVERCLE DE CAPTEUR

(30) Priorität: 11.09.2018 DE 102018215393
(43) Veröffentlichungstag der Anmeldung: 21.07.2021
(73) Patentinhaber: AUMOVIO Autonomous Mobility Germany GmbH, 85057 Ingolstadt (DE)
(72) Erfinder: WINTERMANTEL, Markus, 90411 Nürnberg (DE)
(74) Vertreter: Aumovio Corporation
(86) Internationale Anmeldenummer: PCT/DE2019/200098
(87) Internationale Veröffentlichungsnummer: WO 2020/052719

(56) Entgegenhaltungen:
- EP-A1- 1 662 609
- WO-A1-2016/144956
- WO-A1-2018/001921
- US-A1- 2003 011 519

## Beschreibung

Die Erfindung bezieht sich auf ein Radarsystem zum Einsatz für Fahrerassistenzsysteme im Kraftfahrzeug. Das Radarsystem besitzt erfindungsgemäß eine kunststoffbasierte Hohlleiterantenne, welche eine reduzierte Empfindlichkeit auf Störwellen auf der Antenne sowie auf Reflektionen von einer Sensorabdeckung besitzt.

### Stand der Technik

Kraftfahrzeuge werden zunehmend mit Fahrerassistenzsystemen ausgerüstet, welche mit Hilfe von Sensorsystemen die Umgebung erfassen und aus der so erkannten Verkehrssituation automatische Reaktionen des Fahrzeugs ableiten und/oder den Fahrer instruieren, insbesondere warnen. Dabei unterscheidet man zwischen Komfort- und Sicherheitsfunktionen.

Als Komfortfunktion spielt in der momentanen Entwicklung FSRA (Full Speed Range Adaptive Cruise Control) die wichtigste Rolle. Das Fahrzeug regelt die Eigengeschwindigkeit auf die vom Fahrer vorgegebene Wunschgeschwindigkeit ein, sofern die Verkehrssituation dies zulässt, andernfalls wird die Eigengeschwindigkeit automatisch an die Verkehrssituation angepasst.

Sicherheitsfunktionen gibt es mittlerweile in vielfältiger Ausprägung. Eine Gruppe bilden dabei Funktionen zur Reduzierung des Brems- bzw. Anhalteweges in Notsituationen bis hin zur autonomen Notbremsung. Eine weitere Gruppe sind Spurwechselfunktionen: Sie warnen den Fahrer bzw. greifen in die Lenkung ein, wenn der Fahrer einen gefährlichen Spurwechsel durchführen möchte, also wenn sich ein Fahrzeug auf der Nebenspur entweder im toten Winkel befindet (wird als BSD - "Blind Spot Detection" - bezeichnet) oder sich schnell von hinten nähert (LCA - "Lane Change Assist").

In absehbarer Zukunft wird der Fahrer aber nicht mehr nur assistiert, sondern die Aufgabe des Fahrers wird zunehmend autonom vom Fahrzeug selber erledigt, d.h. der Fahrer wird zunehmend ersetzt; man spricht von autonomem Fahren.

Für Systeme der oben beschriebenen Art werden Radarsensoren eingesetzt, häufig auch in Fusion mit Sensoren anderer Technologie wie z.B. Kamerasensoren. Radarsensoren haben den Vorteil, dass sie auch bei schlechten Wetterbedingungen zuverlässig arbeiten und neben dem Abstand von Objekten auch direkt deren radiale Relativgeschwindigkeit über den Dopplereffekt messen können. Als Sendefrequenzen werden dabei 24GHz, 77GHz und 79GHz eingesetzt.

Durch den zunehmenden funktionalen Umfang solcher Systeme erhöhen sich permanent die Anforderungen, z.B. an die maximale Detektionsreichweite. Gleichzeitig findet aber dennoch ein starker Preisverfall statt.

Zentrales Element jedes Radarsensors ist die Antenne; sie definiert maßgeblich die Performance und den Preis des Sensors. Aktuell werden die Antennen meist in Planartechnologie auf der Hochfrequenz-Platine realisiert, z.B. als Patchantennen. Nachteilig an einer solchen Antennenrealisierung sind einerseits die Verluste in Zuleitungen und Antennen selber (was die Reichweite limitiert) und andererseits die hohen Kosten für eine solche Platine (insb. weil spezielle hochfrequenzfähige Substrate benötigt werden, die teuer sind und eine aufwändige Prozessierung benötigen). Außerdem sind solche planaren Antennen anfällig bzw. sensitiv auf Mehrfachreflektionen zwischen der Antenne und der sensor- und/oder fahrzeugseitigen Abdeckung, also den sogenannten Radomen. Solche Mehrfachreflektionen führen insbesondere zur Verschlechterung der Güte der Winkelbildung, was beispielsweise zu falscher Fahrspurzuordnung von Fahrzeugen führen kann und damit zu falscher Systemreaktion. Analoge Effekte ergeben sich auch durch Störwellen, insbesondere Oberflächenwellen auf der Antenne, welche zu Verkopplungen und Änderungen der Strahlcharakteristik führen. Ein aktuell verwendeter Ansatz zur Reduzierung solcher Effekte ist die Verwendung von absorbierendem Material außerhalb des Strahlbereichs der eigentlichen Antennen, was aber mit Zusatzkosten verbunden ist.

Mittlerweile werden nun alternative Ansätze zur Realisierung der Antenne untersucht; als vielversprechender Ansatz zeichnen sich dabei kunststoffbasierte Hohlleiterantennen ab, da sie zum einen sehr geringe Verluste aufweisen und zum anderen vergleichsweise geringe Materialkosten haben und es mittlerweile auch großserientaugliche Verfahren zu ihrer Herstellung gibt. Beispielsweise ist aus der EP 1 662 609 A1 eine in einem Stoßfänger eines Fahrzeuges integrierte Antenne mit einer metallisierten Plastikstruktur bekannt. Ferner zeigt die WO 2016/144956 A1 ein Radarsystem mit reduzierten Multipfadeffekten, bei dem eine Abschirmung aus Kunststoff verwendet wird.

### Aufgabe, Lösung und Vorteile der Erfindung

Aufgabe der Erfindung ist es, Ausgestaltungen von Kunststoffantennen vorzuschlagen, welche reduzierte Empfindlichkeit auf Störwellen auf der Oberfläche der Antenne sowie auf Reflektionen von einer Sensorabdeckung besitzen, um insbesondere eine robustere Winkelbildung zu realisieren.

Diese Aufgabe wird grundsätzlich durch ein Radarsystem gemäß den Ansprüchen 1-6 gelöst.

Die Vorteile der Erfindung ergeben sich aus der Tatsache, dass ein Radarsystem mit verbesserter Performance und/oder geringerem Preis und/oder geringeren Anforderungen an die Sensorabdeckung realisiert werden kann.

Erfindungsgemäß umfasst das Radarsystem zur Umfelderfassung eines Kraftfahrzeugs eine Antenne auf Kunststoffbasis, wobei die Kunststoffantenne auf einer Vorderseite, die einer sensor- und/oder fahrzeugseitigen Abdeckung zugewandt ist, mehrere Einzelantennen zum Senden und/oder Empfangen von Radarsignalen aufweist und die mehreren Einzelantennen zur Detektion von Objekten und/oder ihrer Winkelbestimmung benutzt werden, wobei die Vorderseite der Kunststoffantenne zwischen den Einzelantennen auf ihrer Oberfläche zumindest teilweise nicht reflektierend, also insbesondere nicht metallisiert, ausgebildet ist, und zumindest teilweise aus radarabsorbierendem Kunststoffmaterial, das Radarwellen teilweise oder ganz absorbiert, ausgebildet ist und/oder die Vorderseite der Kunststoffantenne zwischen den Einzelantennen passive Antennen, sogenannte Blindantennen, aufweist, die zumindest einen Teil der von ihnen empfangenen Leistung nicht wieder zurückreflektieren, sondern in das Kunststoffmaterial absorbieren, und/oder die Vorderseite der Kunststoffantenne zumindest partiell eine nichtplanare, reflektierende Oberfläche, also insbesondere ein nichtplanare, metallisierte Oberfläche, aufweist, und/oder die Ränder der Vorderseite der Kunststoffantennen nicht parallel, insbesondere schräg zu den Einzelantennen, liegen.

Durch eine derartige Ausgestaltung werden Störwellen auf der Oberfläche der Antenne und/oder Reflektionen zwischen der Antenne und der sensorseitigen und/oder fahrzeugseitigen Abdeckung unterdrückt bzw. ihre negativen Auswirkungen insbesondere auf die Winkelbestimmung vermieden oder reduziert.

In einer vorteilhaften Ausführung weist die Vorderseite der Kunststoffantenne eine nichtplanare reflektierende Oberfläche auf, die Einzelantennen besitzen eine Bündelung in vertikaler Dimension, d.h. in Elevation, mit Hauptstrahlrichtung etwa bei Elevation 0°, und die Oberfläche bezogen auf vertikale Schnitte verläuft nicht linear. In einer bevorzugten Ausgestaltung verläuft die Oberfläche bezogen auf die vertikale Schnitte mit gestuftem oder sägezahnförmigem Verlauf oder Kombinationen davon.

Von Vorteil ist es, wenn die Oberfläche nur außerhalb der Einzelantennen ganz oder teilweise nichtplanar ist. Es ist aber auch möglich, dass auch die Einzelantennen ganz oder teilweise eine nichtplanare Oberfläche aufweisen.

Ferner kann die Vorderseite der Kunststoffantenne zwischen den Einzelantennen auf ihrer Oberfläche zumindest teilweise nicht reflektierend, also insbesondere nicht metallisiert, ausgebildet sein, wobei insbesondere die Strukturen und/oder Metallisierungen innerhalb der Antenne nicht durchgängig homogen sind.

### Kurzbeschreibung der Zeichnungen

In Fig. 1 ist eine Hochfrequenzplatine eines Radarsystems nach Stand der Technik dargestellt; auf ihr sind Sende- und Empfangsantennen als planare Patchantennen realisiert.
Fig. 2 zeigt links die Vorderseite und rechts die Rückseite einer quaderförmigen kunststoffbasierten Hohleiterantenne.
Fig. 3 zeigt einen Schnitt durch einen Radarsensor mit einer kunststoffbasierten Hohleiterantenne, wobei sich der Radarsensor hinter einer fahrzeugseitigen Abdeckung befindet.
Fig. 4 zeigt Reflektionen zwischen Antenne und einer fahrzeugseitigen Abdeckung sowie Oberflächenwellen auf der Antenne.
In Fig. 5 ist eine Vorderseite der Kunststoffantenne mit zusätzlichen Blindantennen dargestellt.
Fig. 6 zeigt Reflektionen zwischen Antenne und einer fahrzeugseitigen Abdeckung für den Fall, dass die Vorderseite der Kunststoffantenne nicht metallisiert ist und die obere Lage der Antenne auf ihrer Rückseite in den Bereichen zwischen den Einzelantennen strukturiert und metallisiert ist.
Fig. 7 zeigt eine Kunststoffantenne, die in vertikale Richtung eine sägezahnförmige Oberflächenstrukturierung aufweist.
Fig. 8 zeigt für die Antenne nach Fig. 7 die Reflektionen zwischen Antenne und einer zum Sensor parallelen fahrzeugseitigen Abdeckung; Fig. 8a ist dabei eine Ansicht von oben, Fig. 8b von der Seite.
In Fig. 9 ist eine Kunststoffantenne dargestellt, deren rechte und linke Kanten der Vorderseite jeweils schräg zu den Einzelantennen liegen; das linke Bild zeigt die Antenne von vorne, das rechte einen horizontalen Schnitt in der gekennzeichneten Ebene.

### Ausführungsbeispiele

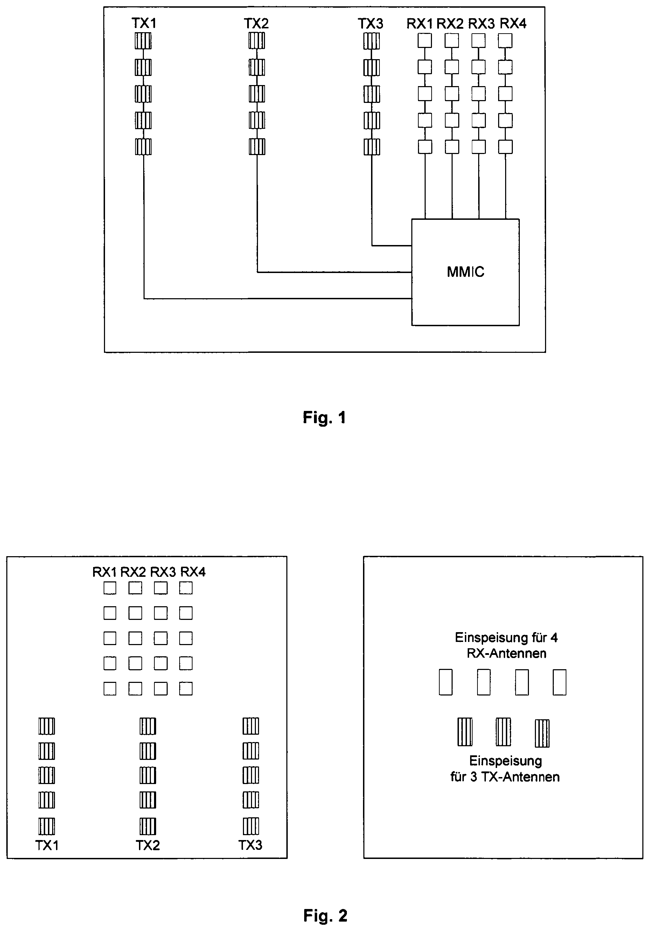

Heute werden Antennen für Radarsysteme zur Umfelderfassung meist als planare Antennen auf einer Hochfrequenzplatine realisiert. Fig.1 zeigt eine Hochfrequenzplatine mit einem Hochfrequenzbauteil, einem sogenannten MMIC (Monolithic Microwave Integrated Circuit) und mit 3 Sendeantennen (TX) sowie 4 Empfangsantennen (RX), wobei die Antennen jeweils aus mehreren Antennenelementen (sogenannte Patches) zusammengesetzt sind. Die Patches der Sendeantennen sind in Fig. 1 nur zur Unterscheidung schraffiert dargestellt - sie haben physikalisch die gleiche Struktur wie die Patches der Empfangsantennen. Auch in einigen weiteren Bildern sind Sendeantennen und ihre Einspeisungen schraffiert dargestellt, wobei ihre physikalischen Strukturen immer gleich sind wie die bei den Empfangsantennen.

Die Antennen und ihre Zuleitungen vom Hochfrequenzchip benötigen auf der Oberlage der Hochfrequenzplatine ein spezielles Substrat mit für Hochfrequenz geeigneten Materialdaten, wie beispielsweise definierter Dicke, definierter Dielektrizitätskonstante und/oder sehr geringer Verlustwinkel. Insbesondere die Materialkosten dieses speziellen Substrats und seine Prozessierung (auch wegen der erforderlichen hohen Strukturgenauigkeiten) führen auf um Faktoren erhöhte Kosten gegenüber einer reinen Niederfrequenzplatine gleicher Größe und gleicher Lagenanzahl. Neben den Kosten sind auch die Signalverluste in den Antennen und ihren Zuleitungen nachteilig. Für eine Sende- und eine Empfangsantenne inkl. Zuleitungen zusammen liegt man typischerweise bei Leistungsverlusten von etwa 6dB - eine so um 6dB reduzierte Sensorempfindlichkeit resultiert in einer um 30% reduzierten maximalen Sensorreichweite.

Wegen dieser Nachteile von platinenbasierten Antennen werden nun verstärkt sogenannte Wellenleiterantennen betrachtet; Antennen und ihre Zuleitungen werden mit Hilfe von Hohlleitern realisiert, welche im einfachsten Fall rechteckförmige Hohlräume mit metallischen bzw. metallisierten Wänden darstellen. Eine solche Antenne kann als quaderförmiges Kunststoffteil ausgeführt sein (siehe Fig. 2), wobei es auf der im linken Bild dargestellten Vorderseite Öffnungen zur Abstrahlung, auf der im rechten Bild dargestellten Rückseite Öffnungen zur Einspeisung und innerhalb Hohlraumstrukturen gibt, wobei alle Oberflächen (außen und innen) metallisiert sind. Typischerweise ist eine solche Antenne aus mehreren Lagen zusammengesetzt, was beispielsweise auch ein Kreuzen von Hochfrequenzverbindungen zulässt. Da die Anordnung der Einzelantennen nun unabhängig vom Chip ist, kann man - wie in Fig.2 dargestellt - die 3 Sendeantennen z.B. unterhalb der 4 Empfangsantennen anordnen (bei der platinenbasieten Antenne nach Fig. 1 sind sie nebeneinander angeordnet). Auch insbesondere weil der Chip nun nicht mehr auf der Antennenebene liegt, kann man kleinere Sensoren realisieren.

Als Herstellungsmethode für eine solche Kunststoffantenne kommt neben Spritzguss mittlerweile auch 3D-Druck in Frage. Aus metallisiertem Kunststoff hergestellte Wellenleiterantennen haben gegenüber einer vollmetallischen Realisierung deutlich Kostenvorteile.

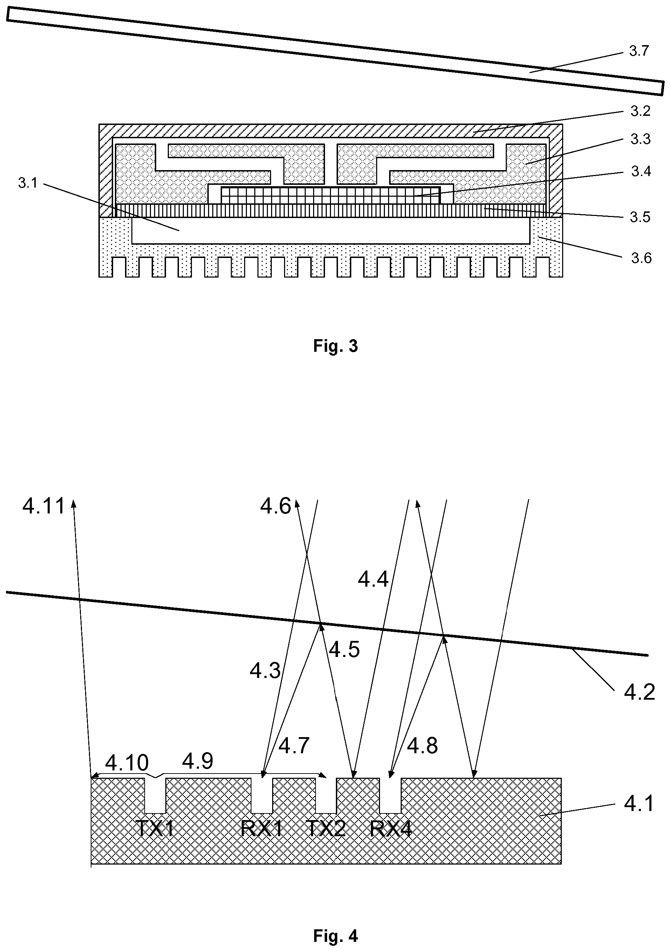

In Fig. 3 ist ein Schnitt durch den Radarsensor 3.1 mit einer Kunststoffantenne 3.3 dargestellt. Unterhalb der Antenne 3.3 befindet sich die Platine 3.5 mit dem Hochfrequenzbauteil 3.4, welches durch Hochfrequenzsignale abstrahlende bzw. empfangende Strukturen direkt, also ohne über die Platine 3.5 zu gehen, mit der Antenne 3.3 gekoppelt ist. Umschlossen wird der Sensor 3.1 durch ein rückseitiges Aluminiumgehäuseteil 3.6 und eine vorderseitige Kunststoffabdeckung 3.2, die auch als Sensorradom bezeichnet wird. Der gesamte Sensor 3.1 ist hinter einer fahrzeugseitigen Abdeckung 3.7 (z.B. einem lackierten Stoßfänger) verbaut.

Die fahrzeugseitige Abdeckung 3.7 ist meist hinsichtlich ihrer Eigenschaften für das Durchdringen von Radarwellen nicht optimiert. Neben Dämpfung kommt es zu Teilreflektion der Radarwellen. Dies ist in Bild 4 veranschaulicht; im dortigen horizontalen Schnittbild ist vereinfachend nicht der ganze Sensor gezeigt, sondern nur die Kunststoffantenne 4.1 mit einem Teil der Antennen und eine schräg dazu stehende Abdeckung 4.2. Der einfallende Wellenstrahl 4.3 trifft direkt auf die Empfangsantenne RX1. Der einfallende Wellenstrahl 4.4 trifft auf die metallisierte Oberfläche der Antenne und wird von dort als Wellenstrahl 4.5 reflektiert - allerdings geht nur ein Teil 4.6 dieses reflektierten Strahls 4.5 durch die Abdeckung hindurch, der andere Teil 4.7 wird von der Abdeckung zurückreflektiert und trifft auch auf die Empfangsantenne RX1. Damit überlagern sich an der Empfangsantenne RX1 zwei Strahlen, die im Allgemeinen unterschiedliche Phase haben - auch wenn der doppelt reflektierte Strahl 4.7 kleinere Amplitude als der direkte Strahl 4.3 aufweist, verfälscht er die Phasenlage und die Amplitude des Empfangssignals der Empfangsantenne RX1. Neben Strahl 4.7 gibt es natürlich noch weitere doppelt reflektierte Strahlen, die auf die Empfangsantenne RX1 treffen. Für die anderen Empfangsantennen gibt es natürlich auch die Überlagerung von direkten und doppelt reflektierten Strahlen; da die Abdeckung 4.2 schräg zur Antenne 4.1 steht, ist die relative Phasenlage der doppelt reflektierten Strahlen von Antenne zu Antenne aber unterschiedlich, wie man leicht am Bild für RX4 wegen der unterschiedlichen Weglängenverhältnisse des doppelt reflektierten Strahls 4.8 im Vergleich zum doppelt reflektiertem Strahl 4.7 erkennen kann. Für die Winkelbildung werden die Empfangssignale aus allen Kombinationen von Sende- und Empfangsantennen benutzt; dazu wird eine digitale Strahlformung durchgeführt. Wenn es nun durch solche Mehrfachreflektionen zu unterschiedlicher Beeinflussung der Signale hinsichtlich ihrer Amplitude und Phase kommt, wird die Winkelbildung verfälscht, was zu einer falschen Positionierung von Objekten, also beispielsweise zu einer falschen Fahrspurzuordnung und damit falscher Systemreaktion führt. Zusätzlich wird über die Amplitudenfehler auch noch die Radarreflektivität, also der sogenannte RCS der Objekte falsch geschätzt, was zu einer falschen Klassifizierung führen kann.

Neben diesen Mehrfachreflektionen kommt es auch durch Störwellen, die sich auf der Oberfläche der Antenne ausbreiten, zu Amplituden- und Phasenfehlern der Signale. Diese sogenannten Oberflächenwellen führen zum einen zu Verkopplung von Antennen - in Fig. 4 koppelt die Sendeantennen TX1 über die Oberflächenwelle 4.9 in die Sendeantenne TX2; zum anderen kommt es zu zusätzlicher Abstrahlung an den Rändern der Antenne - in Fig. 4 kommt es über Oberflächenwelle 4.10 von Sendeantenne TX1 zu Abstrahlung 4.11 am linken Rand.

Im Folgenden werden nun verschiedene erfindungsgemäße Maßnahmen erläutert, um solche Effekte bei einer Kunststoffantenne zu verhindern oder zumindest zu reduzieren.

Ein erster Ansatz besteht darin, zumindest die Oberlage der Kunststoffantenne aus radarabsorbierendem Kunststoffmaterial herzustellen und die Vorderseite der Antenne nicht zu metallisieren. Damit werden sowohl Mehrfachreflektionen zwischen Antenne und sensor- bzw. fahrzeugseitiger Abdeckung als auch Oberflächenwellen auf der Antenne unterdrückt oder zumindest reduziert. Manche absorbierende Materialien benötigen auf ihrer Rückseite eine leitende Schicht: diese wird dadurch erzielt, dass die Rückseite der einen oder mehreren absorbierenden Kunststofflagen metallisiert werden. Um bei heutzutage eingesetzten Planarantennen eine solche absorberbasierte Unterdrückung von Mehrfachreflektionen zwischen Antenne und sensor- bzw. fahrzeugseitiger Abdeckung sowie Oberflächenwellen auf der Antenne zu realisieren, werden ein oder mehrere zusätzliche absorbierende Elemente eingesetzt, was zu Zusatzkosten führt, welche durch den obigen erfindungsgemäßen Ansatz zumindest weitestgehend vermieden werden können.

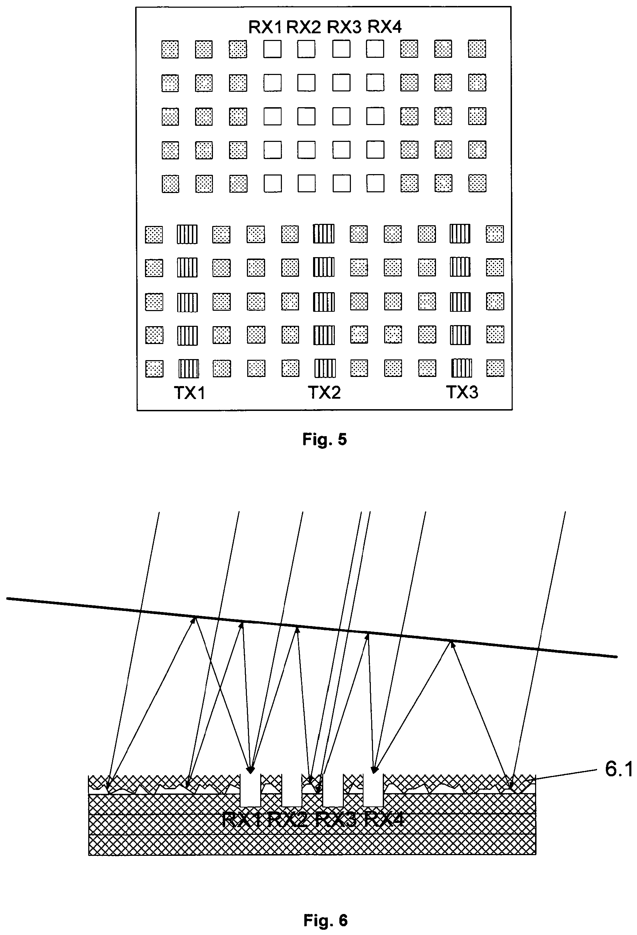

In einer zweiten Ausführung (siehe Fig. 5) werden zwischen den eigentlichen Antennen sogenannte Blindantennen eingefügt; diese sind in Fig. 5 gepunktet dargestellt, wobei jede Spalte eine einzelne Antenne darstellt. Die von diesen Blindantennen empfangene Leistung wird in ihren im Inneren der Antenne realisierten Ableitungen zumindest teilweise dadurch absorbiert, dass dort absorbierender Kunststoff benutzt wird und die Wände der Ableitungen zumindest teilweise nicht metallisiert sind. Dadurch werden sowohl Mehrfachreflektionen zwischen Antenne und sensor- bzw. fahrzeugseitiger Abdeckung als auch Oberflächenwellen auf der Antenne unterdrückt oder zumindest reduziert.

Eine dritte Ausführungsform ist in Fig. 6 dargestellt. Dort ist die planare Vorderseite der Kunststoffantenne nicht metallisiert. Die obere Lage 6.1 der Antenne ist auf ihrer Rückseite in den Bereichen zwischen den Einzelantennen strukturiert und metallisiert, wobei die Form der Strukturierung variiert. Dadurch werden die zwischen den Einzelantennen eintreffenden Strahlen erst an der Rückseite der oberen Lage reflektiert und wegen der durch die Strukturierung unterschiedlichen Dicke der oberen Lage erfahren die reflektierten Strahlen unterschiedliche Phasenlage, d.h. sie werden in unterschiedliche Richtung gestreut. Diese von der Kunststoffantenne zurückgestreuten Strahlen werden teilweise an der fahrzeugseitigen Abdeckung reflektiert und somit auf die Antenne zurückgeworfen. In Fig. 6 werden nur die zurückreflektierten Strahlen dargestellt; der durch die Abdeckung hindurchtretende Anteil nicht, da er für die weitere Betrachtung nicht relevant ist. Dort treffen sie auf den jeweils fünf Empfangselementen der Empfangsantenne mit unterschiedlichen Phasenlagen ein. Somit überlagern sie sich in jeder der Empfangsantennen im Allgemeinen nicht kohärent, sondern löschen sich teilweise aus, so dass diese doppelt reflektierten Störanteile in ihrer Amplitude und damit in ihrer Auswirkung reduziert werden. Wegen der unregelmäßigen Strukturierung variieren diese Störanteile aber auch über die Einzelantennen in Amplitude und Phase; auch wenn diese Störanteile reduziert sind, führen sie in der Winkelbildung (welche durch digitale Strahlformung realisiert wird) zu Fehlern. Kritisch dabei sind insbesondere sich periodisch über die Einzelantennen wiederholende periodische Fehler, welche zu Nebenkeulen in der digitalen Strahlformung und damit zu Geisterzielen führen können; in der Winkelbildung entsteht neben dem realen Objekt ein weiteres nicht existierendes Objekt unter anderem Winkel. Deshalb ist die variierende Strukturierung so zu gestalten, dass sie nicht ein regelmäßiges Muster aufweist, sondern quasi zufällig geartet ist. Bisher war die strukturierte Rückseite der Oberlage der Kunststoffantenne metallisiert; man könnte aber auch diese Metallisierung weglassen. Da der Luftspalt zur nächsten Lage unterschiedlich dick ist und die Wellenlänge in Kunststoff und Luft unterschiedlich sind, ergibt sich auch dadurch eine Streuung der Strahlen. Diesen Ansatz könnte man auch über mehrere Lagen hinweg realisieren. Ein Nachteil dieser dritten Ausführungsform ist, dass der Teil der Oberflächenwellen auf der Antenne, welcher nicht in den Kunststoff eindringt, nicht beeinflusst und damit in seiner Störwirkung nicht reduziert wird.

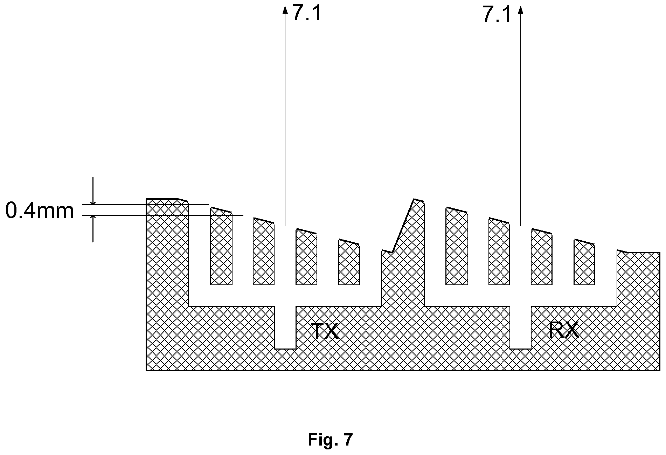

Deshalb wird in einer vierten Ausführungsform die Strukturierung der dann metallisierten Vorderseite der Kunststoffantenne vorgeschlagen. Ein erster Ansatz ist - wie in der dritten Ausführungsform - eine quasi zufällige Strukturierung zu verwenden. In Fig. 7 ist ein zweiter Ansatz dargestellt; wobei die Figur 7 die Kunststoffantenne in einem vertikalen Schnitt zeigt, die also nun in vertikale Richtung eine sägezahnförmige Oberflächenstrukturierung aufweist; in horizontale Richtung gibt es keine Strukturierung, d.h., an jeder Stelle der Antenne sieht der vertikale Schnitt wie in Fig. 7 aus - auch im Bereich der Einzelantennen selber. Da die Antennen in Elevation weiterhin senkrecht zum Gesamtsensor, also in Richtung 7.1 ihre Hauptabstrahlung (also größte Leistungsdichte) haben sollen, müssen ihre fünf Antennenelemente jeweils unterschiedliche Phasenlage haben, welche ihre unterschiedliche Laufzeit außerhalb der Antenne für senkrechte Abstrahlung kompensieren. Wie in Fig. 7 dargestellt, ist der Höhenunterschied zwischen benachbarten Antennenelementen bevorzugt 0.4 mm, also 1/10 der Wellenlänge von etwa 4mm bei der hier betrachteten Radarfrequenz von 76GHz, so dass für senkrechte Abstrahlung von Antennenelement zu Antennenelement eine Weglängendifferenz von 1/10 einer Wellenlänge durch einen Phasenversatz von 360°/10 = 36° zu kompensieren ist. Diese Phasenversätze werden durch unterschiedlich lange Zuleitungen zu den Antennenelementen von ihrem gemeinsamen Speisepunkt realisiert. Dies gilt sowohl für Sende- als auch Empfangsantennen.

Betrachtet man nun beispielsweise die Verkopplung der benachbarten Empfangsantennen RX1 und RX2 (bei Anordnung wie in Fig. 2), dann wird diese durch Verkopplung jeweils benachbarter Antennenelemente dominiert. Eine Verkopplung kommt dadurch zustande, dass die von der Empfangsantenne RX2 empfangene Leistung durch nicht optimale Anpassung beispielsweise an dem gemeinsamen Ausspeisepunkt der Antennenelemente teilweise zurückreflektiert wird und dann auf der Oberfläche der Kunststoffantenne in die jeweils benachbarten Antennenelement der Empfangsantenne RX1 koppelt. Die in der Empfangsantenne RX2 reflektierte und an der Empfangsantenne RX1 ankommende Leistung hat dort über die Antennenelemente unterschiedliche Phase; die Phasenverschiebung durch unterschiedliche Weglänge zum gemeinsamen Speisepunkt wirkt doppelt (in RX2 und RX1), so dass sich von Antennenelement zu Antennenelement von RX1 eine Phasendifferenz von 72° ergibt. Bei fünf Antennenelementen führt das zu einer vollständigen Auslöschung der fünf verkoppelten Antennenelementsignale in der Empfangsantenne RX1.

Für Mehrfachreflektionen zwischen Abdeckung und Kunststoffantenne wirkt die in vertikale Richtung sägezahnförmig ausgeprägte Oberfläche gemäß Fig. 7 in analoger Weise.

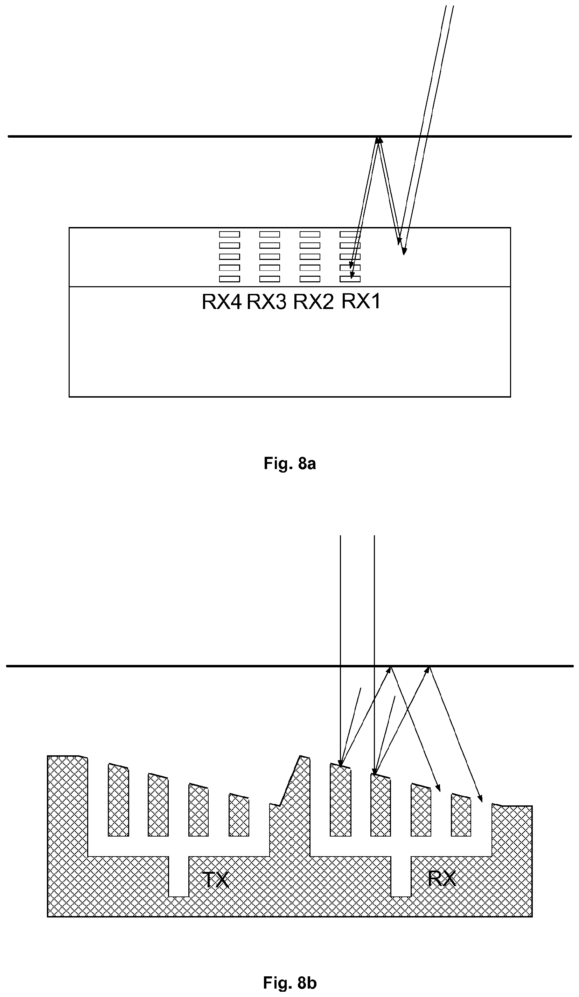

Fig. 8a zeigt die Antenne von oben bei einer in horizontaler Richtung leicht schräg einfallenden Welle. Die Abdeckung ist parallel zum Sensor. Durch die zur Abdeckung schräge Oberfläche der Kunststoffantenne fallen die doppelt reflektierten Störstrahlen mit unterschiedlicher Phasenlage an dem gemeinsamen Ausspeisepunkt der fünf Antennenelemente der Empfangsantenne RX4 ein (für die anderen Empfangsantennen gilt das in gleicher Weise). Durch die doppelte Reflektion geht die Weglängendifferenz von etwa 1/10 der Wellenlänge bezogen auf die zwei benachbarten Antennenelemente doppelt ein; eine dritte Wegenlängendifferenz beim Einfall auf die Antennenelemente geht nicht ein, da diese in der Antenne durch unterschiedliche Weglängen zum gemeinsamen Ausspeisepunkt kompensiert wird - genauso wie bei den direkt einfallenden Strahlen. Damit haben die doppelt reflektierten Störstrahlen wieder einen sukzessiven Phasenversatz von 72° zwischen den fünf Antennenelementen zur Folge, so dass sie sich auslöschen und damit die Winkelbildung nicht mehr stören können. Dies erlaubt nun auch, geringere Anforderung an die fahrzeugseitige Abdeckung des Sensors zu stellen, was insbesondere zu preislichen Vorteilen führen kann.

Diesen Effekt kann man sich auch alternativ so erklären: In Fig. 8b sind die Antenne und diese doppelt reflektierten Störstrahlen von der Seite dargestellt. Durch die vertikale Kippung der Antennenoberfläche fällt die Störstrahlung mit doppelter Elevationsverkippung auf die Antenne ein; da die Antenne durch ihre vertikale Ausdehnung einen eingeschränkten Sensitivitätsbereich um ihre senkrechte Empfangsausrichtung hat, nimmt sie für signifikant von 0° abweichende Elevationswinkel keine oder nur eine geringe Leistung der einfallenden Wellen auf.

Die obige Betrachtung der zumindest nahezu vollständigen Auslöschung gilt nur für sehr kleine Azimutwinkel; für größere Azimutwinkel weicht die Wegelängendifferenz von zweimal 1/10 der Wellenlänge und damit die Phasendifferenz von 72° deutlich ab. Dann hat man nur Teilauslöschung, d.h. ein Teil der doppelt reflektierten Strahlen wird noch empfangen. Allerdings ist dieser Störanteil über die vier Empfangsantennen ähnlich, da sich die Strukturierung in horizontale Richtung nicht ändert, also diesbezüglich jede Antenne gleiche Umgebung sieht. Ganz identisch ist die Umgebung der Antennen und damit die Störanteile aber nicht, da beispielsweise bzgl. der Lage der Ränder der Kunststoffantenne und auch der benachbarten Antennenstrukturen Unterschiede bestehen.

Es sei noch bemerkt, dass obige Betrachtung analog auch für die Sendeantennen gilt; dort verfälschen die doppelt reflektierten Strahlen die Amplitude und Phase der ausgesendeten Wellen und damit ebenso die Winkelbildung, da diese über die Signale aller Kombinationen aus Sende- und Empfangsantennen realisiert wird.

In dieser vierten Ausführungsform mit sägezahnförmiger Strukturierung der Oberfläche waren die Antennen selber auch auf der strukturierten Oberfläche realisiert, also vertikal gekippt. Alternativ kann man auch nur die Bereiche zwischen den Antennen sägezahnförmig strukturieren, während alle Antennen selber in einer Ebene realisiert sind; neben den Antennen gibt es dann Stufen, die über die Antennenelemente variieren.

Statt sägezahnförmiger Strukturierung - also kontinuierlicher Kippung - kann man auch eine gestufte Strukturierung verwenden.

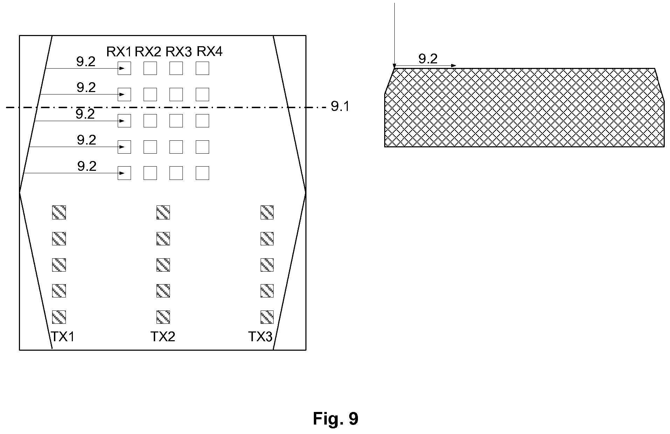

In der fünften Ausführungsform nach Fig. 9 liegen die rechte und linke Kanten der Vorderseite der Kunststoffantenne jeweils schräg zu den Einzelantennen; das linke Bild zeigt die Antenne von vorne, das rechte einen horizontalen Schnitt in der Ebene 9.1. Die empfangsseitig wirkenden Oberflächenwellen 9.2 kommen nun an den fünf Antennenelementen der Empfangsantenne RX1 mit unterschiedlichen Weglängen und damit Phasenlagen an, so dass sie sich zumindest teilweise auslöschen (für die anderen Empfangsantennen und die Sendeantennen gilt dies analog). Statt schräg angeordneten Rändern kann man natürlich auch andere Formen, z.B. gestufte und gezackte Verläufe einsetzen.

Abschließend sei noch bemerkt, dass es nicht nur durch die fahrzeugseitige Abdeckung des Sensors zu Mehrfachreflektionen mit entsprechend negativen Effekten kommt, sondern auch durch die sensorseitige Abdeckung, also das vordere Sensorgehäuse. Auch hier helfen die oben beschriebenen Maßnahmen analog, was zu verbesserter Sensorperformance und/oder geringeren Anforderungen an das Sensorgehäuse führt.

## Patentansprüche

1. Radarsystem zur Umfelderfassung eines Kraftfahrzeugs mit einer Antenne auf Kunststoffbasis, wobei die Kunststoffantenne auf einer Vorderseite, die einer sensor- und/oder fahrzeugseitigen Abdeckung zugewandt ist, mehrere Einzelantennen zum Senden und/oder Empfangen von Radarsignalen aufweist und die mehreren Einzelantennen zur Detektion von Objekten und/oder ihrer Winkelbestimmung vorgesehen sind,
**dadurch gekennzeichnet, dass**
- die Vorderseite der Kunststoffantenne zwischen den Einzelantennen auf ihrer Oberfläche zumindest teilweise nicht reflektierend, also insbesondere nicht metallisiert, ausgebildet ist, und zumindest teilweise aus radarabsorbierendem Kunststoffmaterial, das Radarwellen teilweise oder ganz absorbiert, ausgebildet ist und/oder
- die Vorderseite der Kunststoffantenne zwischen den Einzelantennen passive Antennen, sogenannte Blindantennen, aufweist, die zumindest einen Teil der von ihnen empfangenen Leistung nicht wieder zurückreflektieren, sondern in das Kunststoffmaterial absorbieren, und/oder
- die Vorderseite der Kunststoffantenne zumindest partiell eine nichtplanare, reflektierende Oberfläche, also insbesondere eine nichtplanare, metallisierte Oberfläche, aufweist, und/oder
- die Ränder der Vorderseite der Kunststoffantennen nicht parallel, insbesondere schräg zu den Einzelantennen, liegen,
wodurch Störwellen auf der Oberfläche der Antenne und/oder Reflektionen zwischen der Antenne und der sensorseitigen und/oder fahrzeugseitigen Abdeckung unterdrückt bzw. ihre negativen Auswirkungen insbesondere auf die Winkelbestimmung vermieden oder reduziert werden.

2. Radarsystem nach Anspruch 1, **dadurch gekennzeichnet, dass** die Vorderseite der Kunststoffantenne eine nichtplanare reflektierende Oberfläche aufweist, die Einzelantennen eine Bündelung in vertikaler Dimension, d.h. in Elevation, mit Hauptstrahlrichtung etwa bei Elevation 0° besitzen, und die Oberfläche bezogen auf vertikale Schnitte nicht linear verläuft.

3. Radarsystem nach Anspruch 2, **dadurch gekennzeichnet, dass** die Oberfläche bezogen auf vertikale Schnitte mit gestuftem oder sägezahnförmigem Verlauf oder Kombinationen davon verläuft.

4. Radarsystem nach Anspruch 2 oder 3, **dadurch gekennzeichnet, dass** die Oberfläche nur außerhalb der Einzelantennen ganz oder teilweise nichtplanar ist.

5. Radarsystem nach Anspruch 2 oder 3, **dadurch gekennzeichnet, dass** auch die Einzelantennen ganz oder teilweise eine nichtplanare Oberfläche aufweisen.

6. Radarsystem nach einem der vorhergehenden Ansprüche, **dadurch gekennzeichnet, dass** die Vorderseite der Kunststoffantenne zwischen den Einzelantennen auf ihrer Oberfläche zumindest teilweise nicht reflektierend, also insbesondere nicht metallisiert, ausgebildet ist, wobei insbesondere die Strukturen und/oder Metallisierungen innerhalb der Antenne nicht durchgängig homogen sind.

## Claims

1. A radar system for capturing the surroundings of a motor vehicle having a plastic antenna, wherein the plastic antenna has a plurality of individual antennas for transmitting and/or receiving radar signals on a front side, which faces sensor-side and/or vehicle-side cover, and the plurality of individual antennas are provided for detecting objects and/or determining their angles,
**characterised in that**
- the front side of the plastic antenna between the individual antennas is at least partially non-reflective, i.e. in particular non-metallized, on its surface, and is formed at least partially from a radar-absorbing plastic material that partially or wholly absorbs radar waves, and/or
- the front side of the plastic antenna has passive antennas, so-called dummy antennas, between the individual antennas, which do not reflect at least part of the power they receive back again, but absorb it into the plastic material, and/or
- the front side of the plastic antenna at least partially has a non-planar, reflective surface, i.e. in particular a non-planar, metallized surface, and/or
- the edges of the front side of the plastic antennas are not parallel, in particular oblique, to the individual antennas,
whereby interfering waves on the surface of the antenna and/or reflections between the antenna and the sensor-side and/or vehicle-side covering are suppressed or their negative effects, in particular on the angle determination, are avoided or reduced.

2. The radar system according to claim 1, **characterised in that** the front side of the plastic antenna has a non-planar reflective surface, the individual antennas have a focusing in the vertical dimension, i.e. in elevation, with the main beam direction approximately at elevation 0°, and the surface does not have a linear profile with respect to vertical sections.

3. The radar system according to claim 2, **characterised in that**, in relation to vertical sections, the surface runs with a stepped or sawtooth-shaped profile or combinations thereof.

4. The radar system according to claim 2 or 3, **characterised in that** the surface is wholly or partially non-planar only outside the individual antennas.

5. The radar system according to claim 2 or 3, **characterised in that** the individual antennas also have a non-planar surface wholly or partially.

6. The radar system according to any one of the preceding claims, **characterised in that** the front side of the plastic antenna between the individual antennas is at least partially non-reflective, that is to say in particular non-metallized, on its surface, the structures and/or metallizations within the antenna not being uniformly homogeneous.

## Revendications

1. Système radar destiné à la détection de l'environnement d'un véhicule automobile avec une antenne en plastique, dans lequel l'antenne en plastique présente, sur une face avant tournée vers un couvercle côté capteur et/ou côté véhicule, plusieurs antennes individuelles destinées à l'émission et/ou à la réception de signaux radar et les plusieurs antennes individuelles sont prévues pour la détection d'objets et/ou la détermination de leur angle,
**caractérisé en ce que**
- la face avant de l'antenne en plastique est réalisée, entre les antennes individuelles, sur sa surface, au moins partiellement de manière non réfléchissante, c'est-à-dire en particulier non métallisée, et est réalisée au moins partiellement en un matériau plastique absorbant les ondes radar, qui absorbe partiellement ou totalement les ondes radar, et/ou
- la face avant de l'antenne en plastique présente, entre les antennes individuelles, des antennes passives, dites antennes aveugles, qui ne réfléchissent pas à nouveau au moins une partie de la puissance qu'elles reçoivent, mais l'absorbent dans le matériau plastique, et/ou
- la face avant de l'antenne en plastique présente au moins partiellement une surface réfléchissante non plane, c'est-à-dire notamment une surface métallisée non plane, et/ou
- les bords de la face avant de l'antenne en plastique ne sont pas parallèles aux antennes individuelles, en particulier sont disposés obliquement par rapport à celles-ci,
moyennant quoi des ondes perturbatrices sur la surface de l'antenne et/ou des réflexions entre l'antenne et le couvercle côté capteur et/ou côté véhicule sont supprimées ou que leurs effets négatifs, en particulier sur la détermination angulaire, sont évités ou réduits.

2. Système radar selon la revendication 1, **caractérisé en ce que** la face avant de l'antenne en plastique présente une surface réfléchissante non plane, les antennes individuelles possèdent une focalisation dans la dimension verticale, c'est-à-dire en élévation, avec une direction principale du faisceau située approximativement à une élévation de 0°, et **en ce que** la surface présente, par rapport à des coupes verticales, un profil non linéaire.

3. Système radar selon la revendication 2, **caractérisé en ce que** la surface présente, par rapport à des coupes verticales, un profil en gradins ou en dents de scie, ou des combinaisons de ceux-ci.

4. Système radar selon la revendication 2 ou 3, **caractérisé en ce que** la surface est totalement ou partiellement non plane uniquement à l'extérieur des antennes individuelles.

5. Système radar selon la revendication 2 ou 3, **caractérisé en ce que** les antennes individuelles présentent également une surface non plane, totalement ou partiellement.

6. Système radar selon l'une quelconque des revendications précédentes, **caractérisé en ce que** la face avant de l'antenne en plastique est réalisée, entre les antennes individuelles, sur sa surface, au moins partiellement de manière non réfléchissante, c'est-à-dire en particulier non métallisée, dans lequel, en particulier, les structures et/ou métallisations à l'intérieur de l'antenne ne sont pas homogènes de manière continue.
